# EUROPEAN PATENT APPLICATION

(11) **EP 4 297 440 A1**
(43) Date of publication of application: **27.12.2023**
(21) Application number: 22180569.0
(22) Date of filing: 22.06.2022
(51) Int. Cl.: H04W 4/029, H04W 4/44

(54) **METHODS, VEHICLE, SERVER, COMPUTER PROGRAM, AND APPARATUS FOR EXCHANGE OF DATA BETWEEN A FLEET OF VEHICLES AND A FLEET BACKEND**

(71) Applicant: Volkswagen Aktiengesellschaft, 38440 Wolfsburg (DE)
(72) Inventor: Pfadler, Andreas, 13357 Berlin (DE); Schönauer, Moritz, 10247 Berlin (DE)

(57) **Abstract**

The present disclosure relates to methods, a vehicle, a fleet backend, a computer program, and an apparatus for exchange of data between a fleet of vehicles and a fleet backend. In particular, the present disclosure relates to a method 100 for exchange of data between a fleet of vehicles and a fleet backend. Method 100 comprises obtaining 110 vehicle connectivity information on a predicted connectivity between vehicles of the fleet. Method 100 further comprises obtaining 120 backend connectivity information on a predicted connectivity of at least one vehicle to the fleet backend and establishing 130 a plan for the exchange of data between the fleet backend and the at least one vehicle based on the vehicle connectivity information and the backend connectivity information

## Description

The present disclosure relates to methods, a vehicle, a fleet backend, a computer program, and an apparatus for exchange of data between a fleet of vehicles and a fleet backend. More particularly, but not exclusively, embodiments relate to a concept for downloading update data from the fleet backend to vehicles of the fleet.

The future of mobility is inseparably linked with vehicles becoming simultaneously connected and automated. It is expected that soon more and more automated vehicles (AVs) will drive on public roads. AVs usually drive in a fleet and sometimes require to receive huge amount of data often coming from a backend. Such data can be necessary to manage the fleet, improve their efficiency, improve automated driving functions, update vehicle functions, and/or optimize their performance. Examples for such data is: over the air update (OTA), shadow function which run in the background (e.g. for test purposes), high definition (HD) maps etc.

In practice, AVs may almost consistently have access to a cellular network. However, cellular networks may be inappropriate for download huge amounts of update data, e.g., due to economical considerations, i.e., costs for using cellular networks. Hence, updates via cellular networks may be very costly.

On the other hand, more appropriate local access points, in practice, are rarely and not continuously available. Updates, therefore, may be interrupted and unsuccessful when the connection to a local access point for the update is interrupted or lost.

So, it is a great challenge for vehicles to update download.

Document US 2019/0258467 A1 suggests a system for a vehicle which comprises a processor, programmed to responsive to receiving a manifest from a server, perform an over-the-air (OTA ) software update while traveling along a route. The manifest is generated remotely by the server using business rules designated by a manufacturer, predicted network connectivity speeds along the route, and estimated time to download the OTA software update. However, this concept heavily relies on a good number of local access points along the route to avoid using cellular networks for the update.

Document US 2021/0224056 A1 relates to a concept which provides that a first vehicle includes a wireless transceiver and a processor which is programmed to responsive to encountering a second vehicle, establish a wireless connection to the second vehicle via the wireless transceiver and obtain a vehicle identification of the second vehicle, identify a software update for a controller of the second vehicle using the vehicle identification. The concept further proposes that the processor is further programmed to responsive to connecting to a predefined wireless network, download the software update into a local storage, and responsive to reencountering the second vehicle, reconnect to the second vehicle via the wireless transceiver and transmit the software update to the second vehicle. However, this concept relies on the vehicles encountering again. So, the update may fail when the vehicles do not reencounter each other.

Hence, it can be seen as an objective of the present disclosure to provide an improved concept for exchanging data between vehicles and a server.

This objective is addressed by the subject-matter of the appended independent and dependent claims.

The concept proposed herein is based on the finding that routes and positions of vehicles of a fleet are predefined and, so, their connectivity to each other and to local access points can be predicted. One basic idea of the present disclosure is to use predictions about the availability of (temporarily available) connections to each other and to local access points in order to plan how a vehicle of the fleet may efficiently exchange data with the fleet backend via temporarily available connections. In this way, e.g., the use of continuous (but more expensive) communication technologies, in particular cellular networks, may be avoided or at least reduced. In practice, in particular energy, hardware, and costs for communication via cellular networks can be saved. Also, the present concept provides that updates are executed more efficiently, e.g., through providing vehicles encountering each other next with different portions of the data to be exchanged and configuring or instructing those vehicles to exchange their portions of data to complete the download/update.

Embodiments provide a method for exchange of data between a fleet of vehicles and a fleet backend. The method comprises obtaining vehicle connectivity information on a predicted connectivity between vehicles of the fleet. The method further comprises obtaining backend connectivity information on a predicted connectivity of at least one vehicle to the fleet backend and establishing a plan for the exchange of data between the fleet backend and the at least one vehicle based on the vehicle connectivity information and the backend connectivity information. In doing so, the vehicle and backend connectivity information allows that the data is exchanged more or even most efficiently. In particular, automated vehicles may apply the proposed method. Especially, the proposed method may be applied to download data from the fleet backend to vehicles of the fleet, e.g., for updating software or digital maps of the environment in the vehicle. So, in practice, vehicles may apply the proposed method particularly for downloading data. However, the skilled person having benefit from the present disclosure will appreciate that the method can be applied for both downloading data from the fleet backend to the fleet and uploading data from the fleet to the fleet backend.

The vehicle connectivity information may indicate which vehicles of the fleet are compatible/able to communicate with each other and/or when (direct) inter-vehicular communication between such vehicles is or will be available for exchange of the data or portions thereof. In examples the vehicle connectivity information may comprise information on at least one of a communication technology of vehicles of the fleet for inter-vehicular communication, planned routes of vehicles of the fleet, and/or a position of vehicles of the fleet. Such vehicle connectivity information allows to plan how the data is distributed to the vehicles in a more or the most favorable way, e.g., such that different portions of the data is distributed to vehicles of the fleet that are able to directly communicate with each other and encounter each other next in order to complete the download more efficiently than if the data was distributed to vehicles that cannot directly communicate with each other or encounter each other later.

In some embodiments, the backend connectivity information and/or the vehicle connectivity information is indicative of a predicted quality of service. This, e.g., allows to predict more accurately how much of the data can be exchanged via a communication link between vehicles or vehicles and the fleet backend and, thus, establish a more efficient plan for exchanging the data.

Optionally, the backend connectivity information comprises information on the availability of a communication link to the fleet backend server via one or more stationary access points. In embodiments, the backend connectivity information, e.g., indicates when, where, for how long, and for which vehicles of the fleet, one or more communication links to the fleet backend are available. In some examples, this information can also indicate which stationary access points are able for which vehicles of the fleet. That kind of backend connectivity information allows to establish an even more accurate plan for exchanging the data and determine, so, how the data can be exchanged even more efficiently.

In some embodiments, the information on the availability of the communication link to the fleet backend comprises information on a position of the stationary access points as well as information on at least one of a position and a planned route of one or more vehicles of the fleet. In some embodiments, the backend connectivity information and/or the vehicle connectivity information is indicative of a predicted connection duration, and wherein establishing a plan of the exchange of data comprises establishing the plan the exchange of data based on the predicted connection duration. This kind of information enables the fleet backend to determine even more accurately where, which, when, and/or for how long stationary access points are available for which vehicles. Consequently, the information on the availability of the communication link to the fleet backend allows to more accurately plan how to exchange data and, thus, how to exchange data even more efficiently.

In some embodiments, establishing the plan for the exchange comprises clustering and/or partitioning the data into multiple data portions and assigning, based on the backend connectivity information and the vehicle connectivity information, a priority to the portions for exchanging the data portions based on their priority. In doing so, portions having a higher priority can be exchanged earlier or first with vehicles of the fleet. For example, in this way, safety relevant portions reach a desired vehicle earlier than less relevant or optional portions of the data. So, the clustering, partitioning, and prioritizing allows an improved data exchange.

Optionally, the method further comprises obtaining information on temporal and/or geographical restrictions on the exchange, and establishing the plan for the exchange of data further based on the restrictions. In practice, e.g., the data is only available in specific geographical regions or countries and/or only in a certain period of time. In such cases, establishing the plan based on such restrictions allows, e.g., to execute a download of data only available in a specific country and/or a specific period of time such that the data is downloaded within this country and/or the period of time. So, the information the on temporal and/or geographical restrictions enable an improved concept of exchanging restricted available data.

In practice, the method may further comprise executing the exchange of data according to the established plan.

In some embodiments, the data comprises map data and/or software data for the vehicle. However, embodiments of the present disclosure are not limited to map or software data but also apply for other data, in particular but not exclusively, data to be downloaded from the fleet backend to one or more vehicles of the fleet. Accordingly, the exchange may particularly comprise downloading the data to at least one vehicle of the fleet according to the plan.

In embodiments, the method can be carried out by the fleet backend or another entity, e.g., an intermediate backend acting as intermediary between the fleet and the fleet backend.

The method can be carried out in a complementary manner together with an interrelated method for a vehicle, as laid out in more detail below.

Accordingly, other embodiments of the present disclosure provide a method for a vehicle in a fleet of vehicles and for exchange of data with a fleet backend. The method comprises providing information on at least one of a planned route and a position of the vehicle for establishing a plan for the exchange of data based on the information. Further, the method comprises exchanging the data with the fleet backend based on the plan for the exchange of data. As stated in connection with the method for the fleet backend, the such information enables the fleet backend to determine more accurately how to exchange data with the vehicle and, thus, a more efficient exchange of data.

Further embodiments provide a computer program having a program code for performing at least one of the methods proposed herein, when the computer program is executed on a computer, a processor, or a programmable hardware component.

Also, embodiments provide an apparatus for exchanging data between vehicles of a fleet and a fleet backend. The apparatus comprises one or more interfaces for communication and a data processing circuit configured to control the one or more interfaces and execute at least one of the methods proposed herein using the one or more interfaces.

Further embodiments provide a server (outside the fleet) comprising the apparatus proposed herein.

Still further embodiments provide a vehicle comprising the apparatus proposed herein.

Some examples of apparatuses and/or methods will be described in the following by way of example only, and with reference to the accompanying figures, in which
Fig. 1 shows a flow chart schematically illustrating an embodiment of method for exchange of data between a fleet of vehicles and a fleet backend;
Fig. 2 shows a flow chart schematically illustrating an embodiment of method for a vehicle in a fleet of vehicles and for exchange of data with a fleet backend;
Fig. 3 shows a flow chart schematically illustrating an application of the proposed concept;
Fig. 4 schematically shows a use case of the proposed concept; and
Fig. 5 shows a block diagram schematically illustrating an embodiment of an apparatus implementing the proposed concept.

Some embodiments are now described in more detail with reference to the enclosed figures. However, other possible embodiments are not limited to the features of these embodiments described in detail. Other embodiments may include modifications of the features as well as equivalents and alternatives to the features. Furthermore, the terminology used herein to describe certain embodiments should not be restrictive of further possible embodiments.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

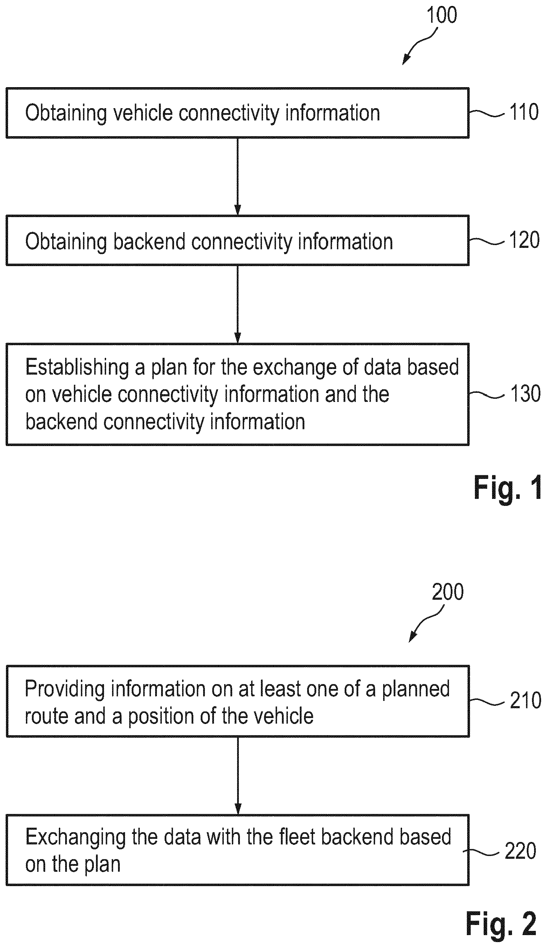

Fig. 1 shows a flow chart schematically illustrating an embodiment of method 100 for exchange of data between a fleet of vehicles and a fleet backend.

The fleet of vehicles can be understood as a group of vehicles using the same backend, here fleet backend, e.g., for updates or other services. In particular, the fleet may comprise (only) vehicles of the same manufacturer or the same business, e.g., the same car rental service. In some scenarios, it may be desired that the vehicles of the fleet exchange data with their backend, e.g., for software updates, map updates, and/or for providing the fleet backend with vehicles data. So, the exchange of data may not only comprise downloading data from the fleet backend to one or more vehicles of the fleet but also uploading data from one or more vehicles of the fleet to the fleet backend.

The fleet backend can be understood as a server outside of the fleet. In practice, the fleet backend may provide one or more several services to vehicles of the fleet, e.g., software updates, map updates, remote diagnostics, and/or the like.

As mentioned earlier, the exchange of data between the fleet and the fleet backend may be challenging because communication among those vehicles and between the fleet backend and the fleet via stationary access points (e.g., stationary wireless local area networks, WLAN, or wired connections at charging points or the like) may only be temporarily available while continuously available communication, e.g., via cellular networks, is undesirable or at least less preferred because of economic reasons/costs.

Examples of the present disclosure may relate to scenarios where only one, more, or all vehicles of the fleet are supposed to exchange data with the fleet backend, e.g., when only one, a portion, or all of the vehicles, respectively, need a software or map update. It is noted that, although, the proposed concept may be described in connection with only one vehicle exchanging data with the fleet backend, the proposed concept also applies for cases where multiple or all of the vehicles exchange data with the fleet backend, and vice versa.

Method 100 comprises obtaining 110 vehicle connectivity information on a predicted connectivity between vehicles of the fleet. The vehicle connectivity information can be understood as information on an availability of direct communication between vehicles of the fleet, in particular, direct communication to at least one vehicle with which the data is to be exchanged. In practice, the vehicle connectivity information may indicate how (i.e., using which communication technology and/or with which quality of service), when (i.e., at which time), where (i.e., at which location), for how long (i.e., for which duration), between or with which vehicles direct communication is available.

For obtaining 110 the vehicle connectivity information, e.g., communication technologies of the vehicles of the fleet may be compared in order to determine which of the vehicles are capable of direct communication with each other.

The present disclosure is based on the finding that vehicles may move along planned routes, e.g., planned trajectories, and, thus, it can be predicted when, where, and for how long vehicles are in range for direct communication with each other. So, the vehicle connectivity information may comprise any information which indicates future movements and/or positions of the vehicle/s. Accordingly, obtaining 110 the vehicle connectivity information may comprise obtaining information on planned routes and/or a position of the vehicles and determining when, where, and/or for how long direct communication is available between vehicles of the fleet when they get in reach for direct communication, e.g., when they encounter each other in traffic and come close enough to each other for direct communication. To this end, vehicles, in particular the vehicle/s that is/are supposed to exchange data with the fleet backend, may provide information on its/their planned route/s (e.g., trajectories and/or route destination/s). Accordingly, the vehicle connectivity information is determined based on the received information. For direct communication, also called "inter-vehicular communication" or "inter-vehicle communication" (IVC), the vehicles, e.g., use vehicular ad hoc networks (VANETs) and intelligent transport systems-5G (ITS-5G), dedicated short range communication (DSRC), and/or any other appropriate technology for direct communication between vehicles. So, the vehicle connectivity information, e.g., indicates which vehicles are compatible with each other for communication via ITS-5G or DSRC, when, where, and/or for how long compatible vehicles will be able to exchange data via direct communication.

In some embodiments, the vehicle connectivity information, in particular, the information on the planned route or position may be received from an entity other than the vehicle/s, e.g., from a remote driving control center controlling and/or navigating the vehicle/s.

Also, method 100 comprises obtaining 120 backend connectivity information on a predicted connectivity of at least one vehicle to the fleet backend. The backend connectivity information can be understood as information on the availability of a connection or communication link between vehicles, in particular the vehicle/s which is/are supposed to exchange data with the fleet backend, and the fleet backend. In practice, the backend connectivity information may comprise information on the availability of such a connection with the fleet backend via both stationary access points (e.g., stationary wireless local area networks or wired network connections, e.g., at charging points) and mobile communication systems (e.g., cellular networks). However, mobile communication systems may be less preferred for the exchange of huge amount of data, e.g., for software or map updates of the vehicles. Hence, in practice, it may be desired that only stationary access points are used for the exchange of data. Accordingly, in such cases, the backend connectivity information may comprise only information on an availability of stationary access points while omitting information on the availability of mobile communication systems for communication with the fleet backend. The present disclosure is based on the finding that predictions for movements of vehicles in the fleet can be used to anticipate the availability of stationary access points for the exchange of data. So, the backend connectivity information may comprise any information on the position of one or more stationary access points and information on future movements or positions of vehicles, in particular, the vehicle/s that is/are supposed to exchange data with the fleet backend. So, in practice, the backend connectivity information or the information on the availability of the fleet backend may comprise any information indicating future routes and/or positions of vehicles and the vehicle/s which are supposed to exchange data with the fleet backend, respectively. The backend connectivity information, e.g., indicates a geographical position of one or more stationary access points and/or a relative position of one or more access points to one or more vehicles of the fleet. As well, the backend connectivity information or information on the availability of the fleet backend may indicate one or more planned routes and/or one or more position of vehicles of the fleet, in particular, of the vehicle/s supposed to exchange data with the fleet backend.

Further, method 100 comprises establishing 130 a plan for the exchange of data between the fleet backend and the vehicle/s supposed to exchange data with the fleet backend based on the vehicle connectivity information and the backend connectivity information. In practice, establishing the plan may comprise scheduling the exchange of data based on the vehicle connectivity information and the backend connectivity information, so, the plan can be also understood as a schedule for exchanging data. In doing so, the plan can be configured or adjusted such that the data exchange is as efficient as possible, e.g., that the exchange of data is completed as soon as possible and/or in the cheapest way. In exemplary scenarios, the plan can be such that a software update of one or more vehicles of the fleet is completed as soon as possible.

For establishing the plan, it may be considered that the vehicles can exchange the data via a communication link to the fleet backend as well as among each other. In this respect, the plan, e.g., provides that a first vehicle receives one portion of the data via the communication link with the fleet backend (e.g., via a stationary access point), a second vehicle of the fleet receives another portion of the data and that the first vehicle receives, using direct communication, the other portion of the data from the second vehicle in order to complete the exchange of data. Accordingly, establishing the plan may comprise clustering and/or partitioning the data into multiple data portions based on the vehicle connectivity information and the backend connectivity information such that the exchange of data is efficient or ideally most efficient. In doing so, sizes of the data portions, i.e., their amount of data, are adapted to the availability of planned sessions for exchanging data with the fleet backend and other vehicles and assigned to the planned sessions, e.g., such that their size is such that the portions can be transferred in the respective assigned planned sessions.

In practice, the plan may provide for one or more sessions for receiving one or more portions of the data via the communication link and one or more portions using direct communication with one or more other vehicles. In particular, the plan may be such that the exchange of data via one or more communication links to the fleet backend and via direct communication with one or more other vehicles is most efficient. To this end, the plan, e.g., provides that the other portion is received from a vehicle which is available next or at least sooner than other vehicles in order to complete the exchange of data sooner than when the other portion is only received from a vehicle which is available later.

The plan, then, can be sent to each vehicle which needs the plan or to only one or more vehicles which, then, share the plan with those vehicles which need the plan to execute the exchange of data as planned. In doing so, the vehicles receiving the plan can be configured to execute the exchange of data as planned, i.e., exchange the right portions of data with the fleet backend and other vehicles at the planned time and using the planned communication technology, etc..

Accordingly, method 100 may further comprise executing the exchange of data according to the established plan. In some scenarios, it is desired than data is downloaded from the fleet backend to one or more vehicles of the fleet. Accordingly, the exchange of data may comprise downloading the data to at least one vehicle of the fleet according to the plan.

The plan, in practice, may comprises several schedules for vehicles of the fleet. In embodiments, a respective schedule, e.g., is configured to instruct the respective vehicle how (e.g., using which communication technology), when, where, and/or with which vehicle or via which stationary access point which data portions are exchanged.

In some embodiments, the backend connectivity information and/or the vehicle connectivity information is indicative of a predicted quality of service. The information on the predicted quality of service (pQoS), in practice, may indicate a data rate. So, the information on the pQoS allows, e.g., to anticipate a data rate of sessions of direct communication between vehicles and between the fleet backend and vehicles for the exchange of data. Hence, such information allows to plan the exchange of data more accurately, and, thus, more efficiently. In practice, this, e.g., allows to adapt the portions of data more accurately. In some examples, this may allow that the portions are larger in terms of their data size than when the portions are adapted to a minimum assumed data rate and, thus, that the exchange of data is completed sooner.

In some embodiments of the present disclosure, the data portions may be assigned a (respective) priority for exchanging the data portions based on their priority. In doing so, their priority may be selected based on an urgency of or relevance. In practice, e.g., safety relevant portions may be assigned a higher priority than less urgent or optional data portions. In embodiments, the data portions, then, may be exchanged in order of their priority, i.e., such that portions having a higher priority are exchanged sooner than portions having a lower priority.

Additionally or alternatively, the priorities may be adapted based on the backend connectivity information and the vehicle connectivity information. In doing so, the priority, e.g., is selected such that the portions are transferred in appropriate sessions, e.g., such that the sessions fit the file size of respective data portions to be transferred in the respective session. The skilled person having benefit from the present disclosure will appreciate that, In this way, a more efficient exchange of the data is possible.

Another finding of the present disclosure is that the data to be exchanged may be only available, allowed, and/or useful in certain geographical regions and/or certain periods of time. For example, some autonomous driving functions are only allowed in certain countries while they are not (yet) allowed in other countries. Accordingly, data relating to such functions may be only useful or allowed in some countries. Also, some data are subject to temporal restrictions, e.g., map data which may become outdated and, so, invalid over time.

In this respect, some embodiments of method 100 may comprise obtaining information on temporal and/or geographical restrictions on the exchange, and establishing the plan for the exchange of data further based on the restrictions. So, portions of the data which, in view of time and location of the vehicle which is supposed to receive the data, is not useful, not available, and/or not allowed, e.g., are omitted when exchanging the data. In turn, other portions of data which, in view of the time and location, are (even) more relevant, e.g., map data of the environment in the current location, may be considered more relevant/urgent. Accordingly, the plan may provide for exchanging such data sooner than less relevant or urgent data portions.

In some applications, method 100 is executed in connection with an interrelated method for a vehicles of the fleet, as explained below with reference to Fig. 2.

Fig. 2 shows a flow chart schematically illustrating an embodiment of method 200 for a vehicle in a fleet of vehicles and for exchange of data with a fleet backend.

As can be seen from Fig. 2, method 200 comprises transmitting 210 information on at least one of a planned route and a position of the vehicle to the fleet backend for the fleet backend to establish a plan for the exchange of data based on the information.

The vehicle can be any road vehicle. In particular, the vehicle can be an (partly/semi) autonomously driving vehicle or a (partly) manually driven vehicle. In embodiments, the vehicle is a car, a truck, a bus, or the like. The present concept is not limited to land vehicles but is also applicable to air or water crafts/vehicles.

The information on the planned route, e.g., contains information on a planned trajectory, positional data from a global positioning system (GPS) and/or a planned destination of the vehicle. The vehicle, e.g., obtains such information, e.g., from an autonomous driving system generating and/or using such trajectories for autonomous driving, from a navigation system, and/or from a GPS system, respectively.

In manually driven vehicles, the planned route, e.g., can be determined from user or control input of a driver. The skilled person having benefit from the present disclosure will appreciate that the planned route, e.g., can be determined based on the operation of turn signals and/or from a user input to the navigation system of a manually driven vehicle.

Further, method 200 comprises exchanging 220 the data with the fleet backend based on the plan for the exchange of data

For exchanging the data according to the plan, the vehicle may receive the plan and may be configured to act based on the plan such that the data is accordingly exchanged, e.g., establish a session for communication with one or more other vehicle/s and/or the fleet backend and request for certain data portions in accordance with the plan.

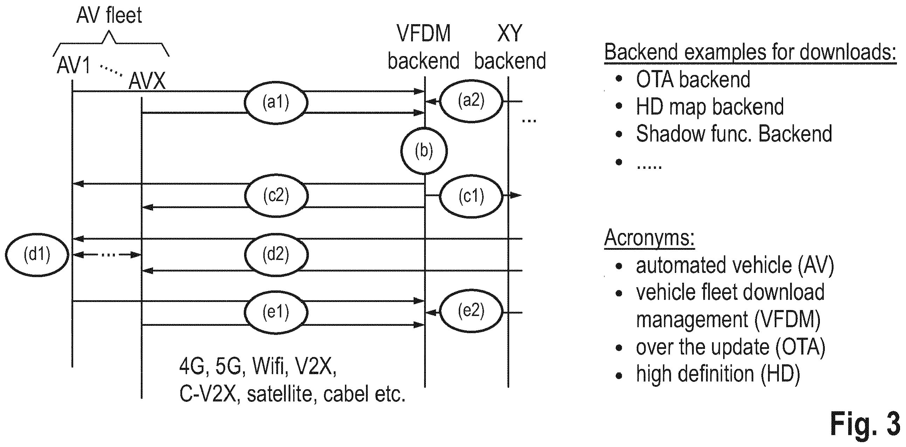

Fig. 3 shows a flow chart schematically illustrating an application of the proposed concept.

In the shown application, the fleet ("AV fleet") comprises a first automated vehicle AV1 and at least one second automated vehicle AVX. Principally, the proposed concept applies to any arbitrary number of vehicles. AV1 and AVX are configured to communicate with an intermediate backend configured to implement the proposed concept (e.g., carry out method 100), here referred to as "vehicle fleet download management (VFDM) backend". The VFDM backend can communicate with a fleet backend, here referred to as "XY backend". XY backend may be located somewhere together with the VFDM backend or they may be separated from each other. XY backend, in practice, may serve a certain service. For example, XY backend serves a certain download service, e.g., relating to a (high definition, HD) map download service, over-the-air download service, or a shadow function service. In embodiments, the VFDM backend may also communicate with several further fleet backends for different purposes. The AVs are connected with each other's and the XY backend(s) via multiple communication, such as, 4G, 5G, satellite, WiFi, C-V2X, V2X etc.. Furthermore, the AVs sometimes will also have a wire based connection when data can be downloaded, e.g., when they are charged.

In step a1 of the application, the AVs transmit information on position, time, current and future/planned route (trip information), but also used software version information to the VFDM backend. This also includes HD map information indicating whether is the map up-to-date.

In step a2, the VFDM backend receives information of the latest downloads available on the XY backend. This may include geographical and time restrictions.

In step b, the VFDM backend manages the download of data to single AVs or to the entire fleet including data indicating temporal and geographical restrictions. It compares the AVs used data (HD maps, software etc.) with the latest available data from the corresponding backend. In case that it detects a deviation between the AVs and the corresponding backend data, i.e., that updates are available, it plans the download (planning algorithm). This can also be triggered by either the AV(s) or backend(s).

For planning the download (data exchange), the VFDM backend uses a so-called "planning algorithm".

In embodiments, the planning algorithm may execute the following steps:
(1) Clustering and partitioning data to be downloaded based on their time and geographical urgency. That is, the data is partitioned or clustered in data portions based on the information on the information on the temporal and geographical restrictions, e.g., such that data related to the same temporal or geographical restrictions are in the same data portion.
(2) Considering the route of the AVs - where they can "collect" the download, such as:
   - when/where they are charged (using wire based connection)
   - Access point (AP) they might cross
   - AVs crossing their path

So, in this step, the VFDM backend determines which stationary wireless or wired access points and which vehicles are available for communication.

(3) Considering and predicting the quality of service (QoS) of the communication when the download is planned to be executed.

(4) Prioritizing the data portions based on their urgency, usefulness, and/or restrictions as well as based on the availability of communication resources, i.e., based on the availability of direct communication with other vehicles and/or via stationary access points.

The VFDM backend may, then, establish a plan for the exchange of data based on an outcome of steps (1) to (4).

(5) Further, the VFDM backend may establish another plan for resending the data in case exchanging the data according to the previous plan failed.

In another step c, the plan is sent to the XY backend ("fleet backend") as well as to the AV fleet in order to instruct them how to handle the download.

The plan may provide that in a step d1, data is exchanged between the AVs and/or one or more access points via direct communication.

Also, the plan may provide that data is transmitted to the AVs directly from the XY backend via a universal mode telecommunications system (UMTS) interface, WiFi, satellite etc..

In another step, step e1, the AV(s) confirm(s) if the download has been completed successfully. In a still further step, step e2, the XY backend(s) confirm(s) if the download if it has been completed successfully.

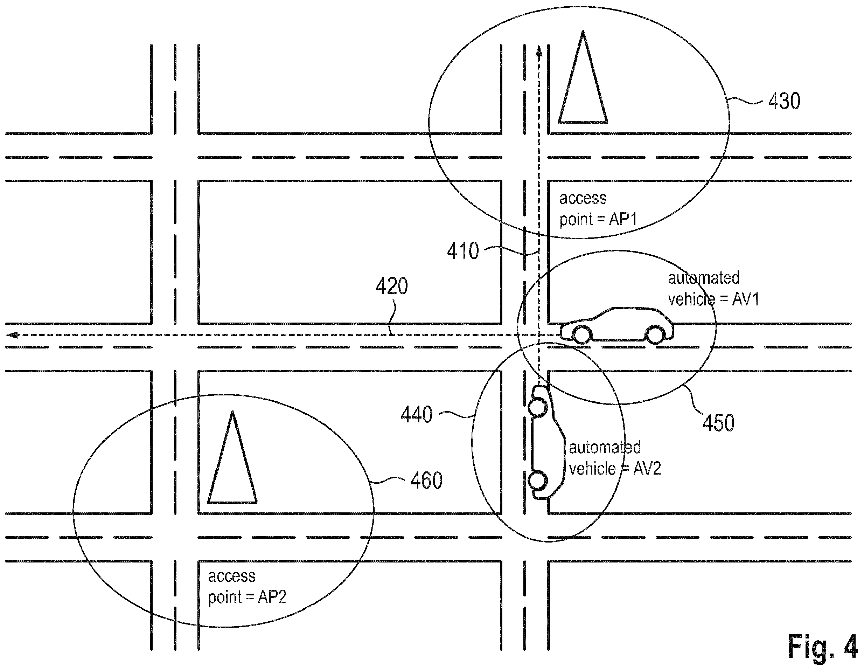

The concept proposed herein should be explained in even more detail by reference to Fig. 4 schematically showing a use case of the proposed concept.

In the shown use case, a fleet of vehicles comprises a first vehicle AV1 heading west (left in Fig. 4) along a planned route 420 passing a first (wireless) stationary access point AP2 with range 460 and a second vehicle AV2 heading north (up in Fig. 4) along a planned route 410 passing a second stationary (wireless) access point AP1 with range 430. The access points AP1 and AP2 are configured to connect with AV1 and AV2 and for communication of AV1 and AV2 with the fleet backend.

A basic goal of the shown use case, e.g., is to download a software update from a fleet backend (not shown) to AV1 and AV2. For this, AV1 and AV2 may provide backend connectivity information including information on their planned route 410 and 420. Also, information on a position of AP1 and AP2 as well as information on their range 430 and 460, respectively, is provided for establishing a plan for downloading the software update. The information on the position and range of AP1 and AP2 may be received from one or more of the AVs or from AP1 and AP2. Also, AV1 and AV2 may provide vehicle connectivity information containing information on their planned routes 410 and 420 and their communication technology, e.g., on a respective range 440 and 450 of their communication technology for direct communication between AV1 and AV2. Although, both the vehicle connectivity information and the backend connectivity information comprises information on the planned routes, in practice, the information on the planned routes may be provided only once in order to save communication resources.

The backend connectivity information and vehicle connectivity information, e.g., are transmitted to an intermediate backend which acts as an intermediary between the AVs and the fleet backend for the software update, thereby executing one of the proposed methods.

In doing so, the intermediate backend may determine, based on the information on the planned route 420 of AV1, the position of AP2, and the range 460 of AP2, that AV1 will not come close enough to AP2 for a session for communication with AP2.

Also the intermediate backend may determine, based on the backend connectivity information indicative on the planned route, the position of AP1, and the range 430 of AP1, that AV2 passes through the range 430 and, so comes close enough for communication with AP1 as well as a time period of a session for communication between AV2 and AP1, i.e., for how long AP1 is available for communication between AV2 and the fleet backend. Analogously, the intermediate backend may determine that AV1 and AV2 come close enough for direct communication with each other as well as a time period of a session for communication between AV1 and AV2 based on the vehicle connectivity information indicative of their planned routes 410 and 420 and ranges 440 and 450.

Further, the intermediate backend may receive information on a pQoS of the sessions. Then, the intermediate backend can determine, based on the time periods and the respective pQoS, a maximum amount of data that can be exchanged during the sessions. In doing so, the intermediate backend may discover that one of the sessions alone is not sufficient for the software update because the amount of data for the software update is larger than the amount of data that can be exchanged in one of the sessions alone. So, the intermediate backend may partition the data in a first data portion that can be exchanged through direct communication in the communication session of AV1 and AV2 with each other and a second data portion that can be exchanged with AV2 in the communication session with the fleet backend via AP1.

Accordingly, the intermediate backend plans that AV2 receives the first data portion from AV1 in the communication session when they encounter each other where their planned routes cross and that AV2 receives the second data portion via AP1 when AV2 passes AP1. For this, the plan provides that AV1 receives the first data portion prior to the communication session with AV2, e.g., via another vehicle or another stationary access point (not shown). Thus, AV2 receives all the data for the software update in parts, i.e., in the first and the second data portion. Ideally, the plan is such that AV1 and AP1 are the next vehicle and access point, respectively, that AV2 is able to communicate with. In this way, the download of the software update is carried out most efficiently or at least more efficiently than for other access points or vehicles, respectively. Thus, even urgent downloads or uploads can be executed in time and, ideally, without using costly cellular networks or satellite-based communication. However, the plan for the download or upload may also provide for using cellular networks and/or satellite-based communication if needed.

The intermediate backend can transmit the plan for the download to AV1, AV2, and the fleet backend to instruct them to execute the download as planned. In order to complete the software update of AV1, the plan may also provide for transmitting the second data portion to AV1, e.g., via the next available stationary access point or vehicle.

The skilled person having benefit from the present disclosure will appreciate that the proposed concept can be also applied to more than two vehicles and/or an arbitrary number of stationary access points. Also, the proposed concept may not only be used for software updates but also for any other data services including download as well as upload services. For example, the proposed concept may be applied for map updates.

In practice, the method for planning the exchange of data preferably may be executed on a server, e.g., the fleet backend or an intermediate backend acting as intermediary between the fleet backend and the vehicles of the fleet because it is easier to provide the technical resources (e.g., computing power) there than, e.g., in the vehicles. However, according to some embodiments, the method for planning the exchange of data may be also executed by one or more vehicles, in particular, vehicles of the fleet.

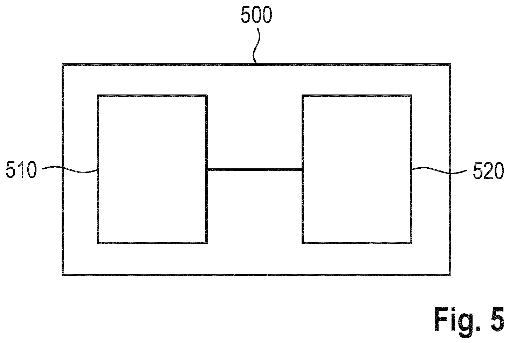

As well, the skilled person will appreciate that the proposed concept can be implemented in respective apparatuses, as illustrated in Fig. 5.

Fig. 5 shows a block diagram schematically illustrating an embodiment of an apparatus 500 implementing the proposed concept

Apparatus 500 comprises one or more interfaces 510 for communication and a data processing circuit 520 configured to control the one or more interfaces 510. The data processing circuit 520 is further configured to execute an embodiment of the proposed methods using the one or more interfaces 510.

In embodiments the one or more interfaces 510 may comprise means for communication with vehicles or another server. For this, the one or more interfaces 510 may comprise or correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 510 may comprise further components to enable according communication, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 510 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc.

As shown in Fig. 5, the one or more interfaces 510 are coupled to the data processing circuit 520. In embodiments the data processing circuit 520 may comprise any means for processing information according to one of the proposed methods. The data processing circuit 520 may be implemented using one or more processing units, one or more processing devices, any means for processing, such as a processor, a computer or a programmable hardware component being operable with accordingly adapted software. In other words, the described functions of the data processing circuit 520 may as well be implemented in software, which is then executed on one or more programmable hardware components. Such hardware components may comprise a general-purpose processor, a Digital Signal Processor (DSP), a micro-controller, etc.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of those.

### List of reference signs

- AV1: first vehicle
- AV2: second vehicle
- AVX: second automated vehicle
- a1 - e2: steps
- 100: method
- 110: obtaining vehicle connectivity information
- 120: obtaining backend connectivity information
- 130: establishing a plan for the exchange of data
- 200: method
- 210: providing information
- 220: exchanging data
- 410: planned route
- 420: planned route
- 430: range
- 440: range
- 450: range
- 460: range
- 500: apparatus
- 510: one or more interfaces
- 520: data processing circuit

## Claims

1. A method (100) for exchange of data between a fleet of vehicles (AV1, AV2) and a fleet backend, the method (100) comprising:
obtaining (110) vehicle connectivity information on a predicted connectivity between vehicles (AV1, AV2) of the fleet;
obtaining (120) backend connectivity information on a predicted connectivity of at least one vehicle (AV1, AV2) to the fleet backend; and
establishing (130) a plan for the exchange of data between the fleet backend and the at least one vehicle (AV1, AV2) based on the vehicle connectivity information and the backend connectivity information.

2. The method (100) of claim 1, wherein the vehicle connectivity information comprises information on at least one of a communication technology of vehicles (AV1, AV2) of the fleet for inter-vehicular communication, planned routes of vehicles of the fleet, and/or a position of vehicles (AV1, AV2) of the fleet.

3. The method (100) of claim 1 or 2, wherein the backend connectivity information and/or the vehicle connectivity information is indicative of a predicted quality of service.

4. The method (100) of any one of the preceding claims, wherein the backend connectivity information comprises information on the availability of a communication link to the fleet backend server via one or more stationary access points (AP1, AP2).

5. The method (100) of claim 4, wherein the information on the availability of the communication link to the fleet backend comprises information on a position of the stationary access points (AP1, AP2) as well as information on at least one of a position and a planned route (410, 420) of one or more vehicles (AV1, AV2) of the fleet.

6. The method (100) of any one of the preceding claims, wherein the backend connectivity information and/or the vehicle connectivity information is indicative of a predicted connection duration, and wherein establishing a plan of the exchange of data comprises establishing the plan the exchange of data based on the predicted connection duration.

7. The method (100) of any one of the preceding claims, wherein establishing the plan for the exchange comprises clustering and/or partitioning the data into multiple data portions and assigning, based on the backend connectivity information and the vehicle connectivity information, a priority to the portions for exchanging the data portions based on their priority.

8. The method (100) of any one of the preceding claims, wherein the method (100) further comprises obtaining information on temporal and/or geographical restrictions on the exchange, and establishing the plan for the exchange of data further based on the restrictions.

9. The method (100) of any one of the preceding claims, wherein the method (100) further comprises executing the exchange of data according to the established plan.

10. The method (100) of any one of the preceding claims, wherein the exchange comprises downloading the data to at least one vehicle of the fleet according to the plan.

11. A method (200) for a vehicle (AV1, AV2) in a fleet of vehicles and for exchange of data with a fleet backend, the method (200) comprising:
providing (210) information on at least one of a planned route and a position of the vehicle (AV1, AV2) for establishing a plan for the exchange of data based on the information;
exchanging (220) the data with the fleet backend based on the plan for the exchange of data.

12. A computer program having a program code for performing at least one of the methods (100, 200) of the preceding claims, when the computer program is executed on a computer, a processor, or a programmable hardware component.

13. An apparatus (500) for exchanging data between vehicles (AV1, AV2) of a fleet and a fleet backend, the apparatus (500) comprising:
one or more interfaces (510) for communication; and
a data processing circuit (520) configured to:
control the one or more interfaces (510); and
execute at least one of the methods (100, 200) of the claims 1 to 11 using the one or more interfaces (510).

14. A server comprising the apparatus of claim 13.

15. A vehicle comprising the apparatus of claim 13.
